# EUROPÄISCHE PATENTSCHRIFT

(11) **EP 1 798 141 B1**
(45) Veröffentlichungstag und Bekanntmachung des Hinweises auf die Patenterteilung: **20.10.2010**
(21) Anmeldenummer: 06025930.6
(22) Anmeldetag: 14.12.2006
(51) Int. Cl.: B62J 1/16

(54) **Babyliegeschale für Fahrräder**
Baby carrier for bicycles
Coque de bébé pour vélos

(30) Priorität: 14.12.2005 DE 202005019517 U
(43) Veröffentlichungstag der Anmeldung: 20.06.2007
(73) Patentinhaber: Nadolny, Nina, 34388 Trendelburg (DE)
(72) Erfinder: Nadolny, Nina, 34388 Trendelburg (DE)
(74) Vertreter: Dantz, Jan Henning

(56) Entgegenhaltungen:
- EP-A- 0 832 811
- EP-A- 1 099 619
- DE-U1- 8 913 375
- DE-U1- 29 817 908
- FR-A- 584 252
- FR-A- 2 764 262
- US-A- 3 902 737

## Beschreibung

Für Babys bis zum 9. Lebensmonat, gibt es keine zufriedenstellende Transportmöglichkeit auf dem Fahrrad. Der Säugling kann nicht, da er noch nicht sitzen kann und die Sitzposition seinen Rücken schädigen würde, in einem herkömmlichen Fahrrassitz transportiert werden.

Den Transport im Tragetuch oder -beutel ziehen die meisten Eltern aus Sicherheitsgründen gar nicht in Erwägung. Und die Möglichkeit, Säuglinge in einer Babyautoschale im Fahrradanhänger zu transportieren, ist für viele nicht zufriedenstellend, weil sie ein so kleines Kind mehr im Blick haben wollen.

Es gibt verschiedene Patente bzw. Gebrauchsmuster auf Babyschalen für Fahrräder bzw. Möglichkeiten, eine Babyschale auf einem Fahrrad zu transportieren. Diese sind allerdings z.T. nicht industriell realisiert und generell nicht weit verbreitet. Sie weisen alle diverse Nachteile auf:
1. Babyschalen, welche mit einem Halterungssystem auf dem Gepäckträger des Fahrrades befestigt werden können (US 5 542 587 und DE 295 11 408 U1)
   Bei diesen Lösungen erschwert die Position auf dem Gepäckträger den Blickkontakt, den sowohl Kinder auch Eltern im ersten Lebensjahr dringend suchen. Außerdem sind die Babyschalen so konstruiert, dass das Kind in einer nach kinderärztlicher Meinung ungünstigen Position liegt, denn besonders ganz junge Säuglinge sollen möglichst flach liegen und dies ist in diesen Babyschalen nicht möglich (diese sind für eine eventuellen Aufprallunfall im Auto konzipiert und der Sitzwinkel beträgt ca. 90 Grad, allerdings in geneigter Position, also mind. 45°).
   Bei der Erfindung Nr. DE 295 11 408 U1 kommt noch ein weiterer Nachteil dazu: Es gibt keinen zufriedenstellenden Kopfschutz für das Baby.
2. Halterungssysteme, mit denen eine vorhandene Babyautoschale oberhalb des Vorderrades am Lenker befestigt positioniert wird, so dass die Babyschale beim Fahren mitgelenkt wird (DE 298 17 908 U1 und G 89 13 375, die als nächstliegender Stand der Technik angesehen wird)
   Dadurch, dass die Babyschale mitgelenkt wird, ist das Lenken schwerfälliger und damit die Fahrt unsicherer. Durch die Höhe des zusätzlichen Gewichts kann das Fahrrad auch mit Doppelständer kaum sicher abgestellt werden, da der Lenker umschlagen kann und dadurch das ganze Fahrrad droht umzukippen. Außerdem ist wieder kein zufriedenstellender Kopfschutz vorhanden.
   Bei der einen Lösung DE 298 17 908 U1 liegt der Säugling außerdem in Fahrtrichtung und hat dadurch keinen Blickkontakt zum Fahrer. Die Babyschale ragt zur Hälfte über das Vorderrad hinaus, wodurch die Babyschale mit Kind wie ein Rammbock anmutet, außerdem wird die Lenkung durch die weite Entfernung des Gewichts von der Lenkachse noch schwerfälliger.
3. Babyschale, welche mit einem Halterungssystem direkt auf dem Lenker positioniert wird (EP 1099 619 A2)
   Die Lösung EP 1099 619 A2 ist eine spezielle Fahrradschale, welche auf dem Lenker mit Blickrichtung zum Fahrer positioniert wird. Bei dieser Positionierung ist das Fahrverhalten stabil, da die Babyschale direkt auf dem Schwerpunkt positioniert wird. Doch die vom Boden aus gesehen hohe Positionierung macht einen unsicheren Eindruck auf die Eltern und bei einem potentiellen Sturz würde der Weg länger und damit die Wucht des Aufpralls größer sein als bei anderen Lösungen. Das Größenwachstum des Säuglings im ersten Lebensjahr (ca. 20 cm) wurde nicht berücksichtigt: Bei größeren Säugligen besteht die Gefahr, dass die Beine des Babys den Fahrer behindern.
4. Halterungssystem, welches es möglich macht, handelsübliche Fahrradsitze für hinten auf dem Gepäckträger oder vorne zwischen Lenker und Fahrer, in eine liegende Position zu bringen (EP 0 832 811 A1)
   Bei einem handelsüblichen Kindersitz für vorne, der zwischen Lenker und Fahrer positioniert wird, fehlt in gekippter Position komplett der Halt für den Kopf eines Babys, da ein Kindersitz nur den (unteren) Rücken stützt. Damit ist dies keine Lösung zum Transport von Säuglingen.
   Bei einem handelsüblichen Sitz für hinten, der auf dem Gepäckträger positioniert wird, ist der Kopf des Säuglings zwar gestützt, aber es ist kein Blickkontakt zum Fahrer möglich. Außerdem ist wie schon erwähnt zwecks Rückenschonung kleinerer Säuglinge eine noch flachere Liegeposition notwendig.

### Aufgabensetzung

Aufgabe der Erfindung ist es eine Transportmöglichkeit für Säuglinge auf dem Fahrrad zu schaffen, bei der ...
1. ... größtmögliche Sicherheit für das Baby gewährleistet ist.
2. ... ein stabiles Fahrverhalten des Fahrrades gegeben ist.
3. ... Blickkontakt zwischen dem Fahrer und dem Kind möglich ist.
4. ... Kopf und Körper des Kindes altersgemäß gestützt werden.
5. ... eine liegende Position für kleine Säuglinge möglich ist.

Zur Lösung dieser Aufgabe dienen die Merkmale des Anspruchs 1, weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert.

Abb. 1 und 2 zeigen die Babyliegeschale von der Seite, montiert auf einem Fahrrad

Abb.3 zeigt die Babyliegeschale von oben und einen Schnitt von der Seite.

Abb.4 zeigt eine Explosion der Elemente die Befestigung der Babyliegeschale an einem Rohr dienen.

Abb. 5 zeigt eine Draufsicht und einen seitlichen Schnitt des Trägers und der Halterung (welche die Babyliegeschale tragen), wie sie am Steuerrohr eines Fahrrades befestigt sind.

Abb.6 zeigt die Elemente zur Befestigung der Babyliegeschale an einem Rohr und drei Ansichten von der Befestigungsplatte.

Abb.7 zeigt die Babyliegeschale seitlich unabhängig von der Befestigung getragen an einem Griff.

Abb.8 und 9 zeigen in einer Seitenansicht wie die Babyliegeschale auf dem Träger und in der Halterung (welche am Fahrrad befestigt sind) positioniert wird.

Abb.10 zeigt die Babyliegeschale in einer Draufsicht befestigt am Steuerrohr eines Fahrrades.

Abb.11 zeigt die Babyliegeschale perspektivisch befestigt am Steuerrohr eines Fahrrades mit einem Kind.

Abb. 12 zeigt den Schlagschutz der Babyliegeschale.

Abb.13 zeigt in Seitenansicht den Arretierungsmechanismus des Schlagschutzes zur Einstellung des Schlagschutzes in verschiedenen Positionen zur Babyliegeschale.

Abb.14 zeigt in Draufsicht den Arretierungsmechanismus des Schlagschutzes zur Einstellung des Schlagschutzes in verschiedenen Positionen zur Babyliegeschale.

Abb. 15 zeigt in Perspektive die gesamte Liegefläche ohne Babyliegeschale.

Abb. 16 zeigt eine Explosion der gesamten Liegefläche.

Abb.17 zeigt in Perspektive die Babyliegeschale mit der Liegefläche in flacher Position.

Abb.18 zeigt in Perspektive die Babyliegeschale mit der Liegefläche in halbliegender Position.

Abb.19 zeigt in Seitenansicht die Babyliegeschale mit der Liegefläche in flacher Position.

Abb.20 zeigt in Seitenansicht die Babyliegeschale mit der Liegefläche in halbliegender Position.

Abb.21 zeigt in Draufsicht das Kopfschutzpolster mit Kind und Gurten.

Abb.22 zeigt in Perspektive das Kopfschutzpolster.

Abb.23 zeigt in Perspektive das Wetterdach und die Babyliegeschale

Abb.24 zeigt in Perspektive die Regendecke am Wetterdach und die Babyliegeschale. Babyliegeschale: Ausführungsbeispiel

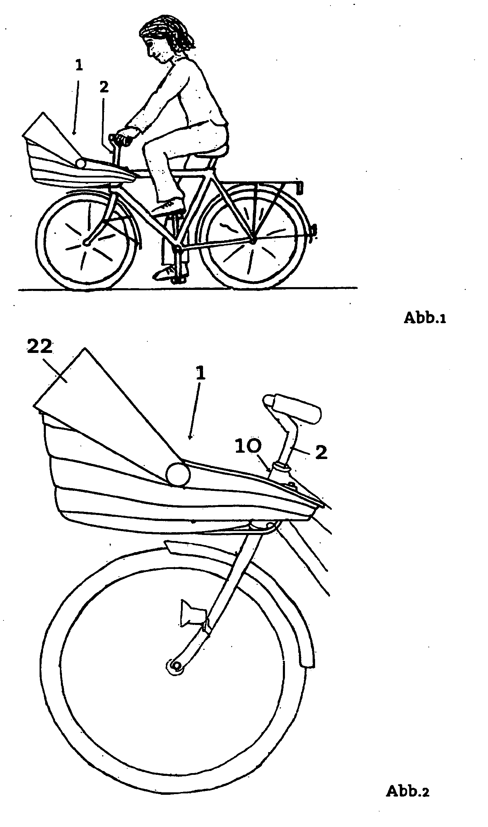

Die erfindungsgemäße Babyliegeschale, im Folgenden kurz Liegeschale 1 genannt, ist etwas unterhalb und vor dem Lenker 2 positioniert, so dass der Erwachsene das Kind immer im Blick hat und der Säugling die beruhigende Anwesenheit des Erwachsenen erfährt. Die Liegeschale ist so am Steuerrohr des Fahrrades befestigt, dass sie nicht mitgelenkt wird. Dadurch hat das Fahrrad ein stabileres Fahrverhalten, als wenn die Liegeschale mitgelenkt werden würde. Das stabile Fahrverhalten dient nicht nur dem Fahrvergnügen, sondern auch der Unfallvermeidung in schwierigen Verkehrssituationen. Die vordere Beleuchtung, die an dieser Stelle üblicherweise am Fahrrad positioniert ist, muss an die Gabel ummontiert werden (Abb. 2).

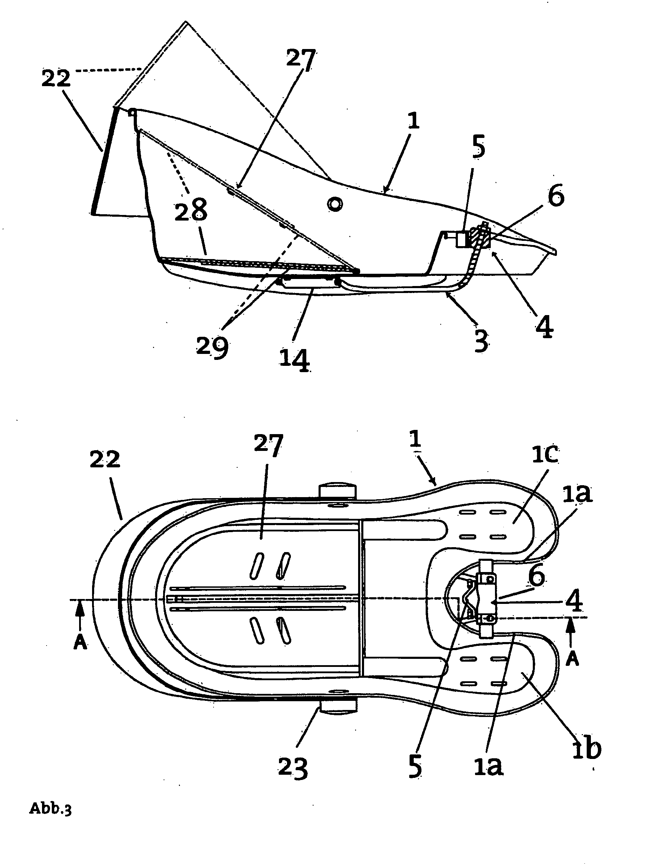

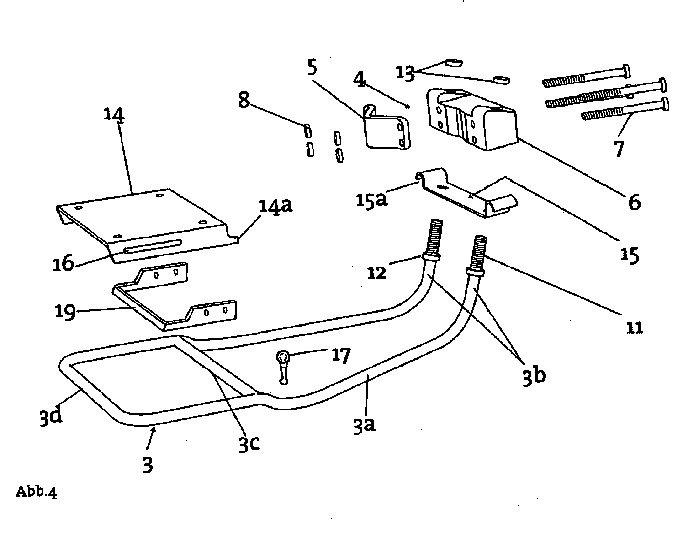

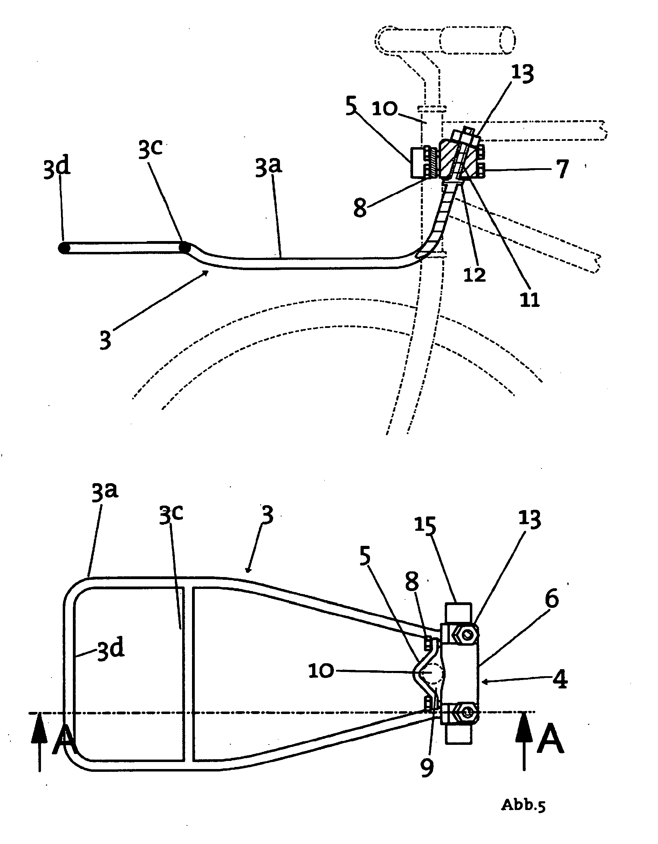

Um all dies zu ermöglichen, weist ein erfindungsgemäßer Transportbehälter (Abb. 1 und 2) eine Liegeschale 1 für ein Baby, einen Tragbügel 3 (Abb. 4 bis 6) und eine Halterung 4 (Abb. 3 bis 5) auf. Die Halterung 4 ist nach Art einer Rohrschelle und im Ausführungsbeispiel zweiteilig ausgebildet. Sie enthält ein vorderes Teil 5 (Abb. 4 und 5, unten) und ein hinteres Teil 6, die beide mit zwei Schrauben 7 und Muttern 8 fest miteinander verbunden werden können und dann eine Aufnahme 9 (Abb. 5, unten) für ein Rohr bilden. Im Falle des Fahrrads ist die Halterung 4 so ausgebildet und bemessen, dass sie durch Klemmung am Steuerrohr 10 des Fahrradrahmens befestigt werden kann.

Der Tragbügel 3 weist gemäß Abb. 4 und 5 einen vorzugsweise nach Art eines Rahmens ausgebildeten, sich über einen vorderen und mittleren Bereich erstreckenden Tragabschnitt 3a und einen hinteren Endabschnitt 3b auf. Der Endabschnitt 3b wird z. B. aus zwei mit dem Tragabschnitt 3a verbundenen Stangen gebildet, die gegenüber der Rahmenebene des Tragabschnitts 3a nach oben abgeschrägt bzw. abgebogen sind. Die beiden Stangen weisen an ihren freien Enden je einen Gewindeabschnitt 11 und einen Anschlag 12 auf. Die Halterung 4, zweckmäßig deren hinteres Teil 6, ist mit zwei Durchgängen versehen, durch welche die Gewindeabschnitte 11 von unten her durchgesteckt werden können, bis die Anschläge 12 am Teil 6 anliegen. Anschließend können die Gewindeabschnitte 11 und damit die zugehörigen Stangen und der gesamte Tragbügel 3 dadurch an der Halterung 4 befestigt werden, dass auf aus den Durchgängen herausragende Enden der Gewindeabschnitte 11 Muttern 13 aufgedreht werden können. Dabei sind die Lage der Durchgänge und die Biegung bzw. Schräglage des Endabschnitts 3b so gewählt, dass der Tragabschnitt 3a des Tragbügels 3 im wesentlichen horizontal angeordnet ist, wenn die Halterung am Steuerrohr 10 und der Tragbügel 3 an der Halterung 4 befestigt ist.

Die Liegeschale lässt sich vorzugsweise mit einfachen Handgriffen am Fahrrad befestigen bzw. vom Fahrrad lösen und mitnehmen oder abstellen. Am Fahrrad bleibt dann der Tragbügel 3 zurück, der dann auch zum Transport anderer Gegenstände als der Liegeschale 1 dienen kann.

Zu diesem Zweck sind für die Verbindung der Liegeschale 1 mit Hilfe des Tragbügels 3 an der Halterung 4 zusätzlich eine Verbindungsplatte 14 und eine Hakenplatte 15 (Abb. 4 und 5) vorgesehen.

Die Verbindungsplatte 14 wird im Ausführungsbeispiel mit vier Schrauben und Muttern am Boden der Liegeschale 1 befestigt, weist an ihrem Vorderende einen unteren, vorstehenden Ansatz 14a auf und ist an zwei nach unten abgekanteten Seitenteilen mit Längsschlitzen 16 versehen. In diesen ist mittels Bolzen 17, wie Abb. 4 in einer auseinander gezogenen Darstellung zeigt, ein Verriegelungselement 18 verschiebbar geführt, das an seinem Vorderende mit einem weiteren, unteren und vorstehenden Ansatz 19 versehen ist. Dieser steht bei nach vorn geschobenem Verriegelungselement 18 nach vorn über die Verbindungsplatte 14 vor und ist bei zurückgezogenem Verriegelungselement 18 unter die Verbindungsplatte 14 zurückgezogen. Mit Handhebeln 20 können die Bolzen 17 gedreht werden, um das Verriegelungselement 18 z. B. durch eine nicht dargestellte Klemmeinrichtung od. dgl. je nach Wunsch gegen Verschiebung zu sichern oder eine solche Verschiebung zu ermöglichen.

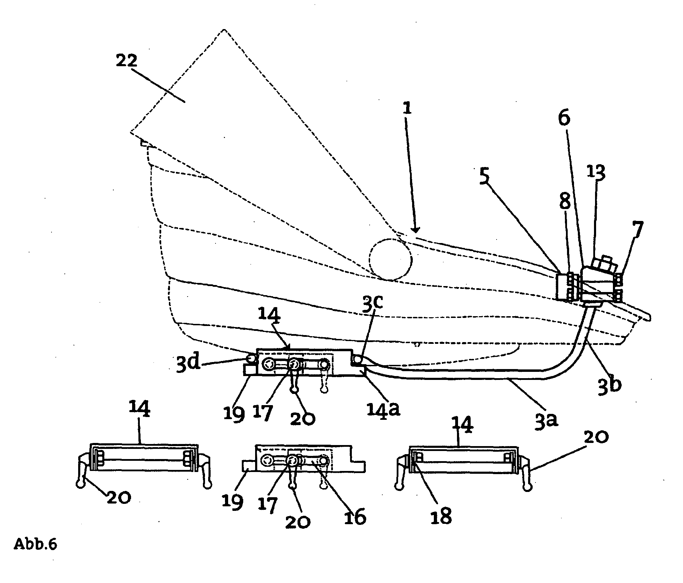

Zur Befestigung der Liegeschale 1 am Tragbügel 3 wird diese zunächst so auf dessen Tragabschnitt 3a aufgelegt, dass der Ansatz 14a der Verbindungsplatte 14 unter eine mittlere Querstrebe 3c des Tragabschnitts 3a greift (Abb. 6). Anschließend wird das Verriegelungselement 14 in Abb. 6 nach links geschoben, bis sein Ansatz 19 unter eine vordere Querstrebe 3d des Tragabschnitts 3 greift, und dann mittels der Hebel 20 verriegelt. Dadurch ist der vordere Teil der Liege 1 fest am Tragbügel 3 befestigt.

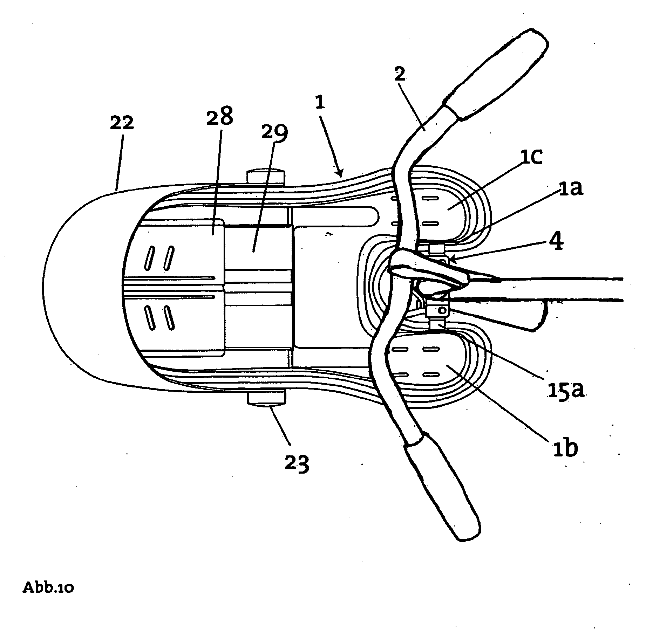

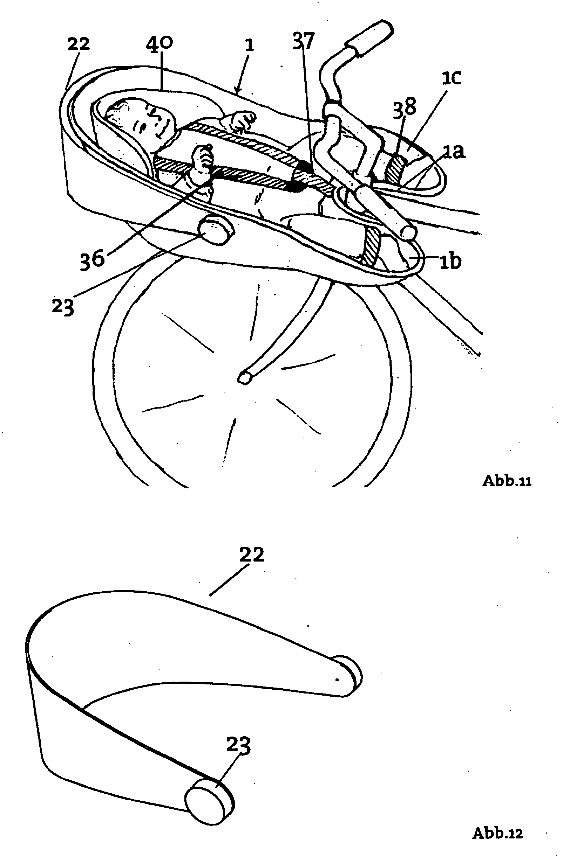

Zur weiteren Stabilisierung der Liege 1 dient die Hakenplatte 15 (Abb. 4). Diese kann mittels zweier Bohrungen auf die Gewindeabschnitte des Endabschnitts 3b des Tragbügels 3 aufgesetzt werden, bis sie sich an den Anschlägen 12 abstützt, so dass sie zwischen diesen und dem hinteren Teil 6 der Halterung 4 zu liegen kommt. Die Hakenplatte 15 ist an ihren Seiten mit zwei nach unten offenen Haken 15a versehen, während die Schale 1 an ihrem Hinterende mit nicht näher dargestellten Randabschnitten 1a versehen ist (Abb. 10 und 11), die nach der beschriebenen Montage der Liegeschale 1 von unten an den Haken 15a anliegen. Dadurch ist es auch bei ungünstigen Gewichtsverhältnissen unmöglich, dass das Hinterende der Schale 1 ungewollt nach oben schwenkt.

Soll die Liegeschale 1 wieder vom Fahrrad getrennt werden, brauchen die beschriebenen Verfahrensschritte nur in der umgekehrten Reihenfolge durchgeführt werden. Wie im Fall der Befestigung sind hierfür nur wenige, einfache Handgriffe erforderlich.

Die beschriebene Montage der Liegeschale 1 am Fahrrad bringt zwei wesentliche Vorteile mit sich, wie z. B. Abb. 1 zeigt. Zum einen kommt die Liegeschale 1 unterhalb des Lenkers 2 des Fahrrades zu liegen, was eine günstige Lastverteilung ermöglicht. Zum anderen ist der Boden und damit die Auflagefläche der Schale 1 für das Baby bei erfindungsgemäßer Dimensionierung der Teile und bei stehendem Fahrrad (Abb. 1 und 2) im wesentlichen horizontal angeordnet, was insbesondere für die Lage von Babys in den ersten Lebensmonaten günstig ist.

Die stoßfeste Schale 1 schützt den Körper des Kindes.

Die Schale 1 sollte annähernd mit dem vordersten Teil des Vorderrades abschließen, so dass sie nicht übermäßig nach vorne über das Vorderrad hinausragt. Dies ist notwendig, damit der Schwerpunkt nicht zu weit vorne liegt und damit das Fahrrad instabil steht oder fährt und die Liegeschale 1 nicht visuell wie ein Rammbock wirkt.

Der Abstand zwischen dem Steuerrohr 10 an der Stelle, wo in einer möglichen Ausführung die Halterung 4 für die Liegeschale 1 montiert wird, und dem vordersten Teil des Vorderrades, beträgt bei den meisten Fahrrädern für Erwachsene zwischen 45 und 50 Zentimetern.

Säuglinge wachsen im ersten dreiviertel Lebensjahr bis zu 20 Zentimetern, und 97 % aller Säuglinge sind mit 9 Monaten maximal 75 Zentimeter groß (Quelle: Kinderuntersuchungsheft des Bundesausschusses der Ärzte und Krankenkassen).

Damit Babys bis zu mindestens einem dreiviertel Jahr in die Liegeschale 1 passen, ohne dass die Liegeschale ca. 30 Zentimeter über das Vorderrad hinausragen muss, werden die Beine links und rechts um das Steuerrohr 10 herumgeführt. Dies wird erfindungsgemäß durch eine im Fuß- und Beinbereich des Kindes zweigeteilte und waagerecht gestreckte Form der Schale 1 ermöglicht. Wie insbesondere Abb. 3, 10 und 11 zeigen, weist die Liegeschale 1 an ihrem Hinterende zwei mit Abstand voneinander angeordnete Bein- bzw. Fußteile 1b, 1c auf, zwischen denen die Halterung 4 angeordnet ist. Die beiden Teile 1b, 1c können auf diese Weise nach rückwärts über die Halterung 4 und die im montierten Zustand sich ergebende Lage des Steuerrohrs 10 hinaus so weit verlängert werden, wie dies im Einzelfall für erforderlich gehalten wird bzw. wie es ohne wesentliche Beeinträchtigung des Fahrens mit dem Fahrrad möglich ist. Dabei ist es möglich, die Bein- und Fußteile 1b, 1c gegenüber dem Boden der Schale 1 leicht abzuwinkeln. Außerdem zeigen Abb. 10 und 11, dass die mit der Hakenplatte 15 zusammenwirkenden Randabschnitte 1a in diesem Fall z. B. an den Innenseiten der Bein- bzw. Fußteile 1b, 1c vorgesehen sind.

Die Schale 1 bietet durch Material und Konstruktion einen sicheren Schutz. In einer möglichen Ausführung wird die z. B. aus Kunststoff hergestellte Schale durch Metallgestänge verstärkt, um den Schlagschutz zu erhöhen.

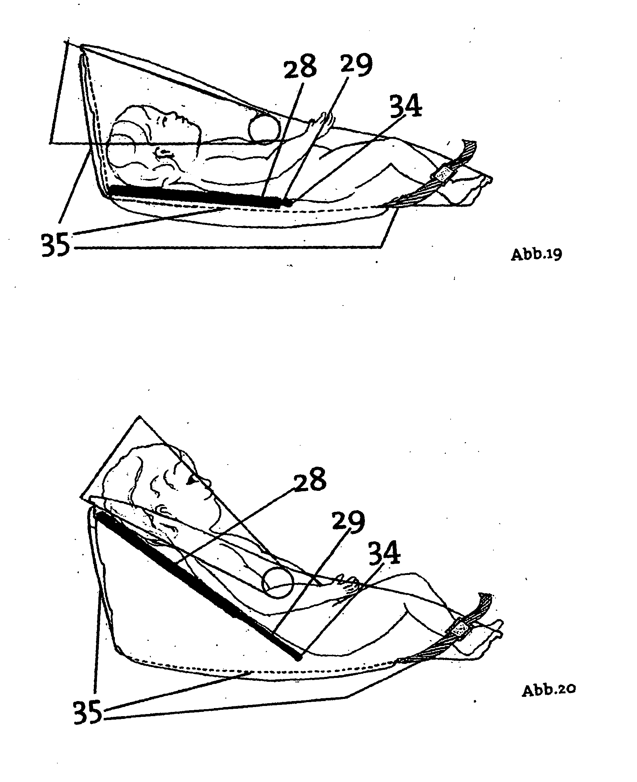

In einer anderen möglichen Ausführung wird die Liegeschale 1 durch einen zusätzlichen Schlagschutz 22 (Abb. 12) verstärkt, der an zwei Befestigungspunkten 23 an der Schale 1 schwenkbar bzw. beweglich befestigt ist und deren Vorderende U-förmig umgreift. Dieser Schlagschutz 22 wird so eingestellt, dass er je nach Liegeposition den Kopfbereich des Säuglings als zweite Schicht zusätzlich zur Schale 1 schützt
(Abb. 19), d. h. bei einem Frontal- oder seitlichen Aufprall würde der Schlagschutz Schläge abfangen, bevor die eigentliche Schale 1 überhaupt getroffen wird. Außerdem kann der Schlagschutz 22 mit einem Befestigungsmechanismus fixiert werden.

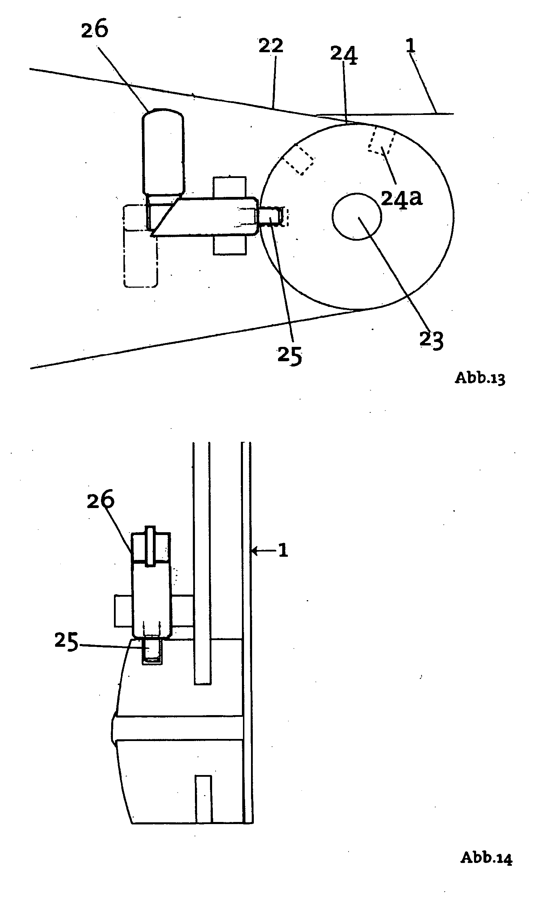

Der Befestigungsmechanismus besteht gemäß Abb. 13 und 14 z. B. aus einer über mehrere Schrauben fest an der Schale 1 montierten, kreisrunden Lochplatte 24 und einem Riegel 25, der mit einer Riegelbefestigung 26 am Schlagschutz 26 befestigt ist. Wenn der Schlagschutz 22 fixiert ist, greift der Riegel 25 in eines von mehreren Löchern 24a (je nach gewünschter Position des Schlagschutzes 22) der Lochplatte 24 ein. Durch Betätigung der Riegelbefestigung 26 kann die Verriegelung wieder gelöst werden.

Wird der Säugling in einer 35-45°-Position der Liegefläche der Liege 1 transportiert, dann schützt der Schlagschutz 22 den Kopf des Kindes allein, d. h. unabhängig von der Schale 1 (Abb. 20).

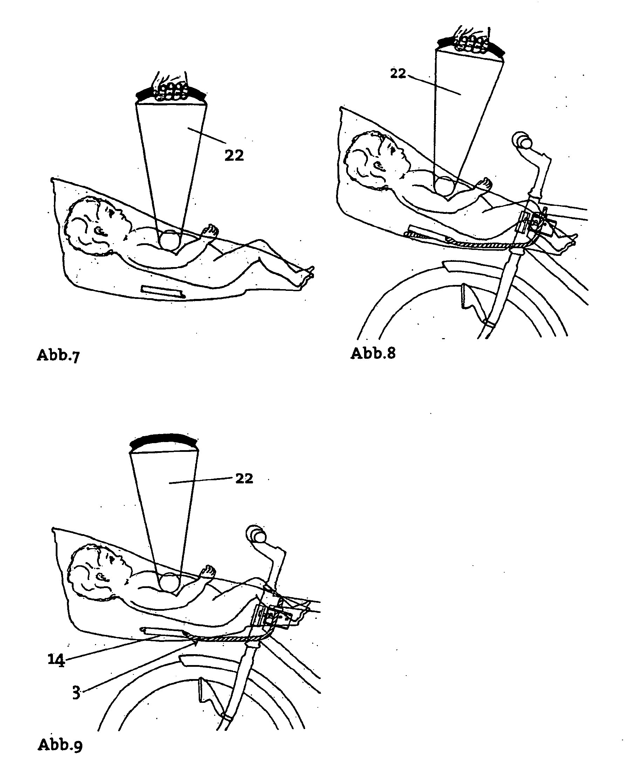

Bei einer möglichen Ausführung kann der Schlagschutz 22 in einer vertikalen Position eingestellt werden, wenn die Liegeschale 1 unabhängig vom Fahrrad transportiert werden soll. Der Tragende kann die Liegeschale so, über den Unterarm gehängt, transportieren (Abb. 7 bis 9).

Bei einer anderen Ausführung ist an dem Schlagschutz 22 ein Griff angebracht. Wenn der Schlagschutz dann in einer vertikalen Position arretiert wird, kann die Fahrradschale an diesem Griff getragen werden.

In einer möglichen Ausführung wird der Schlagschutz an seinen Rändern durch Metall verstärkt.

Auch um Platz zu sparen, aber vor allem um den unterschiedlichen Bedürfnissen von Säuglingen in den unterschiedlichen Lebensmonaten gerecht zu werden, ist eine verstellbare Liegefläche 27 in der Schale angebracht (Abb. 3, 15, 16). Damit sich die Liegefläche 27 der zunehmenden Größe und dem Alter des Säuglings anpassen kann, ist sie so konstruiert, dass sie um so länger wird, je vertikaler (z. B. von 0 bis 45 Grad) sie positioniert wird.

Durch diese Lösung können junge Säuglinge (0 Monate bis ca. 4 Monate) so flach liegen (0° bis max. 10°), wie es für ihre körperliche gesunde Entwicklung notwendig ist, dagegen werden ältere Säuglinge (ca. 5 bis 7 Monate) mehr in der Schräge (11° bis 45°) transportiert. Das ist ihrer körperlichen Entwicklung (stärkere Rücken- und Bauchmuskulatur) und ihren psychischen Bedürfnissen, mehr von der Umgebung wahrnehmen zu können, angemessen. Säuglinge im Krabbelalter (ca. 8 bis 12 Monate) können zwar schon im herkömmlichen Kinderfahrradsitz sitzen, aber für längere Strecken ist die halbliegende Position (45°) der Babyliegeschale besser zum Transport geeignet (Abb. 20), einerseits um den Rücken des Kindes zu schonen und andererseits um das Kind, wenn es einschläft, gut und sicher transportieren zu können.

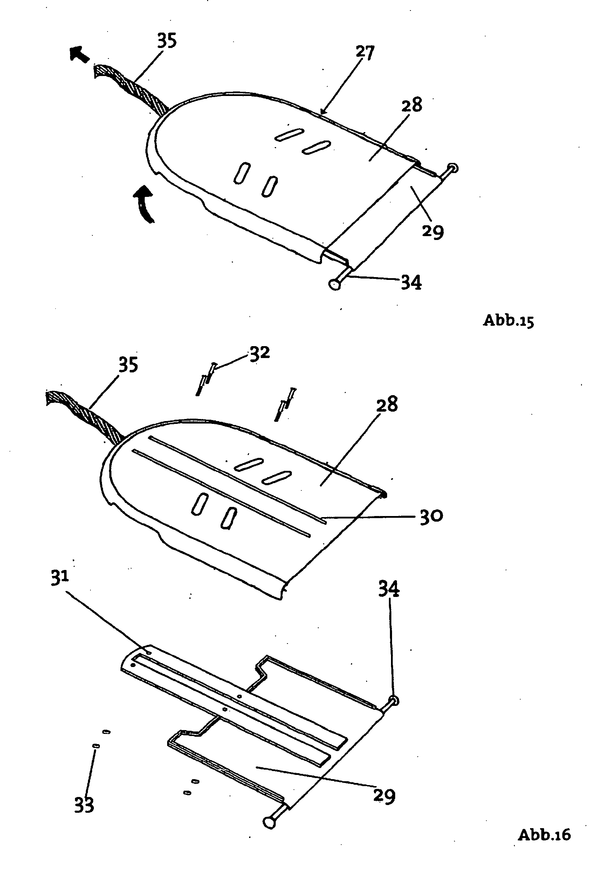

Die Liegefläche 27 enthält gemäß Abb. 15 und 16 zwei relativ zueinander verschiebbare Platten 28 und 29, die übereinander angeordnet sind. Dabei weist z. B. die obere Platte 28 zwei Längsschlitze 30 und die untere Platte 29 diesen zugeordnete Schraublöcher 31 auf. Die Schraublöcher 31 und Schlitze 30 sind von schematisch angedeuteten Schrauben 32 (Abb. 16) durchragt, die mit Muttern 33 gesichert sind. Dadurch ist eine relative Verschiebung der Platten 28, 29 in Richtung der Schlitze 14, die vorzugsweise in Längsrichtung der Liege 1 verlaufen, möglich.

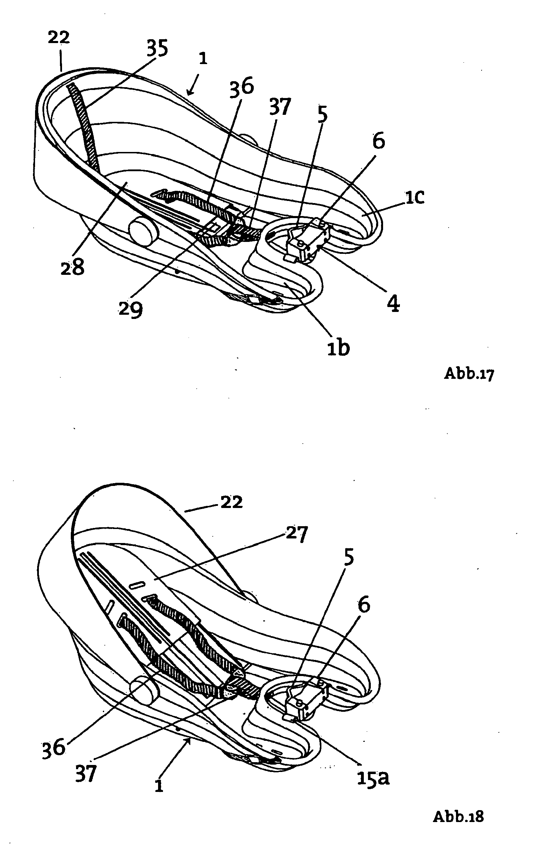

Die untere Platte 29 ist z. B. mittels Gelenkbolzen 34 an Seitenteilen der Liege 1 schwenkbar befestigt. Außerdem ist die obere Platte 28 an ihrem Vorderende mit einem Seil 35 versehen, das über das Vorderende der Liege 1 geführt ist. Durch Zug an diesem Seil 35 kann die Liegefläche 27 von einer zusammengeschobenen Stellung, in der sie vollständig am Boden der Liege 1 aufliegt (Abb. 3, durchgezogene Stellung und Abbildungen 17 und 19) und einer ausgezogenen Stellung (Abb. 3, gestrichelte Stellung und Abb. 18 und 20) verlängert und an der Vorderwand der Liege 1 abgestützt werden. Durch das Gewicht des Kindes wird gewährleistet, dass sich die Liegefläche 27 nicht ungewollt zusammenzieht. In einer anderen möglichen Ausführung kann an der Vorderwand der Liege 1 ein Haken od. dgl. zur Befestigung des Seils vorgesehen sein, um das Zusammenziehen der Liegefläche zu vermeiden.

Um das Kind vorm Herausfallen bei einem Unfall oder durch seine eigenen Bewegungen zu schützen, wird es in einer möglichen Ausführung mit einem 3-Punkt-Gurt 36, 37 und zwei Fußgurten 38 in der Liegeschale 1 angeschnallt werden (Abb. 11).

In einer anderen möglichen Ausführung ist zusätzlich ein Gurt in der Schale 1 befestigt, der von beiden Seiten um der Taille des Kindes liegt und somit das Kind nun von fünf Punkten aus angeschnallt ist.

Dieser zusätzliche Gurt kann, wenn die Liegeschale 1 unabhängig vom Fahrrad zu Fuß transportiert werden soll, verlängert werden und als Tragehilfe über die Schulter des Tragenden gelegt werden.

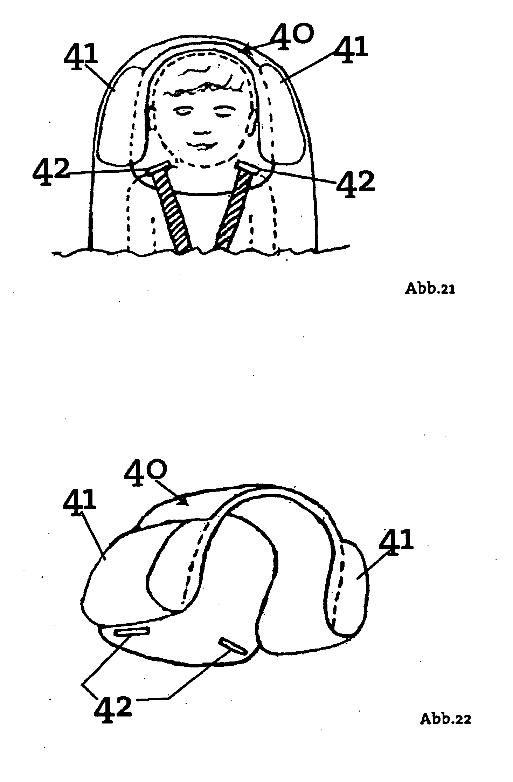

Zur Innenausstattung der Liegeschale 1 gehört neben der Polsterung auch ein spezielles, vorzugsweise an die Innenkontur der Liegeschale 1 angepasstes Kopfschutzpolster 40 zum zusätzlichen Schutz des Säuglings, da ein Baby im Liegen keinen Helm tragen kann (Abb. 11, 21, 22).

In einer möglichen Ausführung liegt das Kopfschutzpolster 40 links, rechts und oben eng am Kopf des Kindes an und füllt den Raum links und rechts der Liegeschale 1 zwischen Kopf und Schalenwänden aus. Es hat eine Höhe zwischen 0 und 15 Zentimeter. Die Kopfpolsterung 40 schützt durch das eng am Kopf anliegende Polster-Material, ähnlich wie ein Fahrradhelm, bei Schlägen oder Stürzen.

Das Kopfschutzpolster 40 besteht in einer möglichen Ausführung aus einem Stoff-Bezug, welcher Polstermaterial (z. B. flaches Schaummaterial ca. 1 bis 3 cm Dicke, wie bei Isolierliegematten für den Outdoorbereich) umhüllt. Um den unterschiedlichen Kopfmaßen Rechnung zu tragen, kann in zwei Bezugtaschen 41 links und rechts vom Kopfschutzpolster 40, unterschiedlich viel Material, zusätzlich zum eigentlichen Polstermaterial, in Form von z. B. flachen Polstermaterialstücken eingesteckt werden.
Das Kopfschutzpolster 40 wird in einer möglichen Ausführung über eine Stofffläche, auf welcher der Kopf des Kindes liegen kann und in welcher sich zwei Löcher 42 befinden, durch die wiederum die Gurte gezogen werden, in der Liegeschale befestigt. Diese Befestigung verhindert ein Verrutschen bei einem möglichen Unfall.

Um den Säugling gegen Kälte zu schützen ist ein Schlafsack vorhanden, bei dem der Beinbereich geteilt ist, damit der Schlafsack in die Liegeschale passt.

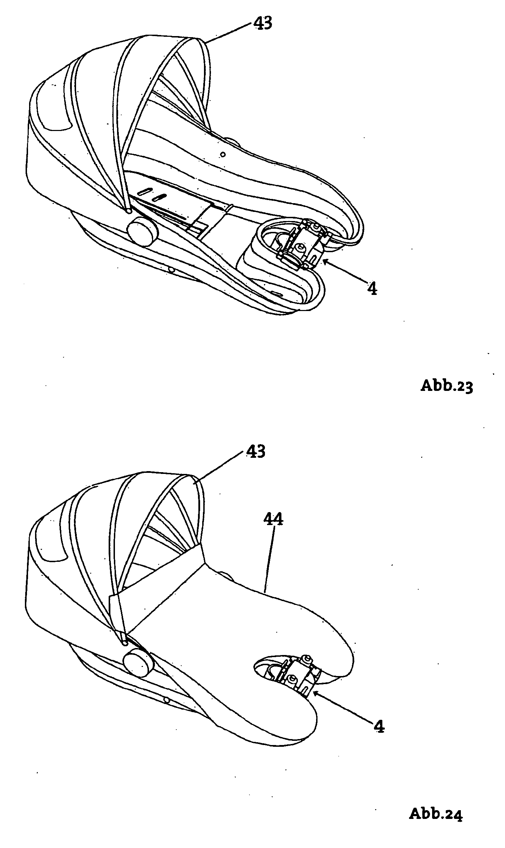

Ein Wetterdach 43 (Abb. 23) ist aus wasserfestem und sonnenundurchlässigem Gewebe oder aus anderem Material hergestellt. Es soll den Säugling gegen Wind, Regen und Sonnenlicht schützen. Das Wetterdach ist in einer möglichen Ausführungsform am Schlagschutz 22 befestigt und kann bei Bedarf mit Hilfe eines oder mehrerer Bügel in Richtung Fahrer ausgeklappt werden. In ausgeklapptem Zustand reduziert es den nach oben geöffneten Teil der Schale.

In einer anderen möglichen Ausführung ist das Wetterdach 43 unabhängig vom Schlagschutz 22 beweglich.

Bei einer möglichen Ausführung ist im Wetterdach 43 noch eine Lüftungsklappe angebracht, um bei Hitze die Luftzirkulation in der Liegeschale möglich zu machen.

Weiterhin kann ein Regenschutz 44 (Abb. 24) vorgesehen sein. Der Regenschutz 44 wird über die Fußteile zum Wetterdach gespannt und schützt zusammen mit dem Wetterdach 43 das Kind gegen Regen und Kälte.

In einer anderen denkbaren Ausführung wird der Regenschutz wie in Abb. 24 über die Fußteile und den Bein/Bauchbereich des Kindes gespannt, aber umschließt zusätzlich die Liegeschale auch im Bereich des Kopfteiles der Schale 1, des Schlagschutzes 22 und des Wetterdachs 43 mit einer Haube und lässt im Sichtbereich des Kindes eine Öffnung.

Schließlich kann ein Sonnensegel das Kind gegen Blendung durch die Sonne schützen (wenn die Sonne im Rücken des Fahrers steht). Das Sonnensegel besteht aus einem Tuch, welches vom Schlagschutz 22 oder vom Wetterdach 43 zum Lenker des Fahrrades gespannt wird und je nach Bedarf (bzw. Sonneneinstrahlung) vom Fahrer weniger oder mehr ausgebreitet über den noch geöffneten Bereich der Liegeschale gezogen werden kann, um das Kind gegen Sonnenlicht von hinten (aus Perspektive des Fahrers) zu schützen.

In einer möglichen Ausführung ist die Liegeschale 1 unabhängig vom Tragbügel 3 und der Halterung 4 auch zur Beförderung des Säuglings mit dem Auto nutzbar.

Die Erfindung ist nicht auf das beschriebene Ausführungsbeispiel beschränkt, das auf vielfache Weise abgewandelt werden kann. Das gilt sowohl für die Form als auch für die technische Ausbildung der verschiedenen Teile, die nur als Beispiele aufzufassen sind. Beispielsweise könnte der Tragbügel 3 statt am Steuerrohr 10 auch an einem anderen rohrförmigen Teil des Fahrradrahmens befestigt werden, was eine entsprechende Änderung sowohl des Tragbügels 3 als auch der Halterung 4 voraussetzen würde. Denkbar wäre auch, den Tragbügel zwei- oder mehrteilig auszubilden, wobei ein Teil an der Schale und ein Teil an der Halterung befestigt ist und Mittel zur Verbindung der beiden Teile miteinander vorgesehen sind. Weiter können die Mittel zur Verbindung und/oder Verriegelung der Liege 1 am Tragbügel anders als beschrieben ausgebildet sein. Außerdem versteht sich, dass die verschiedenen Merkmale auch in anderen als den beschriebenen und dargestellten Kombinationen angewendet werden können.

## Patentansprüche

1. Transportbehälter für Babys mit einer an einem Fahrrad befestigbaren Liegeschale (1), einem Tragbügel (3), der einen vorderen, zur Abstützung der Liegeschale (1) bestimmten Tragabschnitt (3a) und einen hinteren Endabschnitt (3a) angeordneten Endabschnitt (3b) aufweist, und einer zur Befestigung an einem rohrförmigen Teil (10) des Fahrrads bestimmten Halterung (4) für den Endabschnitt (3b), wobei die Anordnung so getroffen ist, dass die Liegeschale (1) im am Fahrrad montierten Zustand im wesentlichen vor dem Steuerrohr (10) des Fahrradrahmens angeordnet ist, **dadurch gekennzeichnet, dass** die Liegeschale (1) an ihrem Hinterende zwei mit Abstand voneinander angeordnete Bein- bzw. Fußteile (1b, 1c) aufweist und die Halterung (4) zwischen diesen beiden Teilen (1b, 1c) angeordnet ist.

2. Transportbehälter nach Anspruch 1, **dadurch gekennzeichnet, dass** der Endabschnitt (3b) des Tragbügels (3) vom Tragabschnitt (3a) aus schräg nach oben verläuft und dass die Halterung (4) nach Art einer zur Befestigung am Steuerrohr (10) bestimmten Rohrschelle ausgebildet ist.

3. Transportbehälter nach Anspruch 1 oder 2, **dadurch gekennzeichnet, dass** der Endabschnitt (3b) des Tragbügels (3) gegenüber dem Tragabschnitt (3a) derart schräg angeordnet ist, dass der Tragabschnitt (3a) im am Fahrrad montierten Zustand des Tragbügels (3) im wesentlichen horizontal angeordnet ist.

4. Transportbehälter nach einem der Ansprüche 1 bis 3, **dadurch gekennzeichnet, dass** der Tragbügel (3) nach Art eines Rahmens ausgebildet ist, sein hinterer Endabschnitt (3b) zwei aus der Rahmenebene heraus nach oben ragende Stangen enthält und die Halterung (4) zur Aufnahme dieser Stangen bestimmte Befestigungslöcher aufweist.

5. Transportbehälter nach einem der Ansprüche 1 bis 4, **dadurch gekennzeichnet, dass** er eine an der Unterseite der Liegeschale (1) befestigbare Verbindungsplatte (14) enthält und dass der Tragbügel (3) .und/oder die Verbindungsplatte (14) mit Mitteln zum Einlegen der Liegeschale (1) in den Tragbügel (3) versehen sind.

6. Transportbehälter nach Anspruch 5, **dadurch gekennzeichnet, dass** diese Mittel auch Verriegelungselemente (6 bis 10) zur Verriegelung der Liegeschale (1) auf dem Tragbügel (3) enthalten.

7. Transportbehälter nach einem der Ansprüche 1 bis 6, **dadurch gekennzeichnet, dass** sie eine auf dem Boden der Liegeschale (1) auflegbare Liegefläche (27) enthält, die stufenlos zwischen einer Liegestellung (0°) und einer zumindest teilweise aufgerichteten Stellung (45°) verstellbar ist.

8. Transportbehälter nach einem der Ansprüche 1 bis 7, **dadurch gekennzeichnet, dass** er an seiner Vorderseite einen schwenkbar gelagerten, die Vorderseite der Liegeschale zumindest teilweise umgreifenden Schlagschutz (22) aufweist.

9. Transportbehälter nach einem der Ansprüche 1 bis 7, **dadurch gekennzeichnet, dass** er ein zum Einlegen in die Liegeschale (1) bestimmtes, und an deren Innenkontur angepasstes Kopfschutzpolster (40) aufweist.

## Claims

1. A transport container for babies, comprising a baby carrier (1) that can be fastened to a bicycle, a support bracket (3) which comprises a front support section (3a) intended for supporting the baby carrier (1) and a rear end section (3b), and a fixing device (4) for the end section (3b) intended for fixing to a tubular part (10) of the bicycle (4), with the arrangement being made in such a way that the baby carrier (1), in the state when mounted on the bicycle, is arranged substantially before the head tube (10) of the bicycle frame, **characterized in that** the baby carrier (1) comprises at its rear end two mutually spaced leg or base parts (1b, 1c) and the fixing device (4) is arranged between these two parts (1b, 1c).

2. A transport container according to claim 1, **characterized in that** the end section (3b) of the support bracket (3) extends in an upwardly inclined manner from the support section (3a) and the fixing device (4) is arranged in the manner of a pipe clip determined for fastening to the head tube (10).

3. A transport container according to claim 1 or 2, **characterized in that** the end section (3b) of the support bracket (3) is arranged in an inclined manner in relation to the support section (3a) in such a way that the support section (3a) is arranged substantially horizontally in the mounted state of the support bracket (3) on the bicycle.

4. A transport container according to one of the claims 1 to 3, **characterized in that** the support bracket (3) is arranged in the manner of a frame, its rear end section (3b) containing two rods protruding upwardly from the plane of the frame and the fixing device (4) having fastening holes determined for accommodating these rods.

5. A transport container according to one of the claims 1 to 4, **characterized in that** it contains a connecting plate (14) which can be fastened to the bottom side of the baby carrier (1) and the support bracket (3) and/or the connecting plate (14) is provided with means for inserting the baby carrier (1) in the support bracket (3).

6. A transport container according to claim 5, **characterized in that** these means also contain locking elements (6 to 10) for locking the baby carrier (1) on the support bracket (3).

7. A transport container according to one of the claims 1 to 6, **characterized in that** it comprises a lying surface (27) that can be placed on the floor of the baby carrier (1), which lying surface is continuously adjustable between a lying position (0°) and an at least partly upright position (45°).

8. A transport container according to one of the claims 1 to 7, **characterized in that** it comprises a pivotably held impact protection (22) which encompasses the front side of the baby carrier at least in part.

9. A transport container according to one of the claims 1 to 7, **characterized in that** it comprises a head-protection cushion (40) which is determined for insertion in the baby carrier (1) and is adjusted to its inner shape.

## Revendications

1. Porte-bébé avec une coque de couchage (1) pouvant être fixée sur une bicyclette, un arceau de transport (3) qui présente une partie de transport antérieure (3a) destinée à soutenir la coque de couchage (1) et une partie d'extrémité arrière (3b), et avec une fixation (4) pour la partie d'extrémité (3b) destinée à la fixation sur une partie tubulaire (10) de la bicyclette, la disposition étant telle que dans l'état de montage sur la bicyclette, la coque de couchage (1) est disposée pour l'essentiel devant le tube de guidon (10) du cadre de bicyclette, **caractérisé en ce que** la coque de couchage (1) présente à son extrémité arrière deux parties formant des jambes ou des pieds (1b, 1c) disposées à distance l'une de l'autre et la fixation (4) est disposée entre ces deux parties (1b, 1c).

2. Porte-bébé selon la revendication 1, **caractérisé en ce que** la partie d'extrémité (3b) de l'arceau de transport (3) est oblique vers le haut à partir de la partie de transport (3a) et **en ce que** la fixation (4) est conformée comme un collier de tube pour la fixation sur le tube de guidon (10).

3. Porte-bébé selon la revendication 1 ou 2, **caractérisé en ce que** la partie d'extrémité (3b) de l'arceau de transport (3) est oblique par rapport à la partie de transport (3a) de telle façon que la partie de transport (3a) soit disposée de façon sensiblement horizontale quand l'arceau de transport (3) est monté sur la bicyclette.

4. Porte-bébé selon l'une des revendications 1 à 3, **caractérisé en ce que** l'arceau de transport (3) est conçu comme un cadre, sa partie d'extrémité arrière (3b) comprend deux barres dépassant vers le haut à partir du plan du cadre et la fixation (4) présente des trous de fixation destinés à recevoir ces barres.

5. Porte-bébé selon l'une des revendications 1 à 4, **caractérisé en ce qu'**elle comprend une plaque d'assemblage (14) pouvant être fixée sur la face inférieure de la coque de couchage (1) et **en ce que** l'arceau de transport (3) et/ou la plaque d'assemblage (14) sont munis de moyens pour introduire la coque de couchage (1) dans l'arceau de transport (3).

6. Porte-bébé selon la revendication 5, **caractérisé en ce que** ces moyens comprennent également des moyens de verrouillage (6 à 10) pour verrouiller la coque de couchage (1) sur l'arceau de transport (3).

7. Porte-bébé selon l'une des revendications 1 à 6, **caractérisé en ce qu'**il comprend une surface de couchage (27) pouvant être posée sur le fond de la coque de couchage (1), qui peut être réglée de façon continue entre une position couchée (0°) et une position au moins partiellement redressée (45°).

8. Porte-bébé selon l'une des revendications 1 à 7, **caractérisé en ce qu'**il comporte sur sa face antérieure une protection antichocs (22) supportée de façon pivotante et entourant au moins partiellement le côté antérieur de la coque de couchage.

9. Porte-bébé selon l'une des revendications 1 à 7, **caractérisé en ce qu'**il comporte un rembourrage de protection de la tête (40) destiné à être introduit dans la coque de couchage (1) et adapté au contour intérieur de celle-ci.
